# EUROPEAN PATENT SPECIFICATION

(11) **EP 4 526 991 B1**
(45) Date of publication and mention of the grant of the patent: **24.06.2026**
(21) Application number: 23733807.4
(22) Date of filing: 19.05.2023
(51) Int. Cl.: H02S 20/00

(54) **FLOATING PHOTOVOLTAIC (PV) ARRANGEMENT FOR FASTENING PV MODULES**
SCHWIMMENDE PHOTOVOLTAIKANLAGE ZUM BEFESTIGEN VON PV-MODULEN
INSTALLATION PHOTOVOLTAÏQUE FLOTTANTE POUR LA FIXATION DE MODULES PV

(30) Priority: 20.05.2022 NO 20220602
(43) Date of publication of application: 26.03.2025
(73) Proprietor: Cyprinus AS, 0107 Oslo (NO)
(72) Inventor: GRIMSRUD, Geir, 1555 Son (NO)
(74) Representative: Bryn Aarflot AS
(86) International application number: PCT/NO2023/050116
(87) International publication number: WO 2023/224493

(56) References cited:
- WO-A1-2016/185267
- WO-A1-2020/204301
- CN-A- 103 314 262
- JP-A- S5 989 471

## Description

### Technical Field

The present invention relates to floating and moored installations for fastening photovoltaic modules generating photovoltaic energy at a predetermined area.

### Background Art

Floating photovoltaic installations are preferably located at ocean locations with the most sun days per year and at remote sites well away from known shipping lanes. However, said areas are also warm ocean waters which are typically near the equator. Waters at or near the equator are also considered to be a hotspot for frequently occurring tropical cyclones, such as hurricanes and typhoons. It is therefore essential that such installations are well built so to withstand the powerful forces of Mother nature.

The document JPS5989471 A discloses a floating photovoltaic installation in which a floating frame body encloses the photovoltaic modules, and floating photovoltaic panels are moored to the ropes stretched within the floating frame.

WO2021035259A1 describes a system for a floating grid acting as a support structure for floating solar panels. The system does not disclose anything wherein it can withstand severe ocean conditions and safeguarding the structural integrity of said solar panels from said conditions.

WO2017023536A1 is a prior art which discloses a similar floating support grid for photovoltaic panels, wherein the grid is made from a combination of polymer tubes and metal frames. The tubes provide buoyancy for the structure and the solar panels are attached to stiff metal rods, which in turn are attached to the tubes. The frame-like structure is moored through mooring lines attached to two or more of the corners of the frame.

The prior art creates a rather stiff structure where all forces have to be taken up by the frame. Both the tubes and the metal rods have to resist relative movement, which otherwise would be transferred to the panels. **If** any part of the structure is damaged, the panels and structure in the vicinity of the damage will be subjected to substantially higher strains. Consequently, the prior art does not describe a sufficiently robust technical solution which can withstand severe ocean conditions.

An alternative prior art, which discloses a floating grid system, is WO2007081221 describing a floating grid system for mooring mobile offshore units, such as drill rigs and FPSOs, located at a predetermined area of operation. However, such solution is mainly made for mooring and containing large vessels. The grid is arranged as a "false seabed" some distance below the water surface. Said large vessels are capable of withstanding harsh ocean conditions on their own and said floating grid system is arranged well below the wave affected water. It does not provide any protection against large waves and storms other than mooring.

### Summary of invention

It is an object of the present invention provide an arrangement for securing photovoltaic modules in a floating grid enclosure, which can withstand severe ocean conditions.

It also an object of the present invention to provide a floating photovoltaic (PV) fastening arrangement for fastening a plurality of floating PV modules generating electric power comprising; a primary buoyant assembly for providing an enclosure for and means for anchoring said plurality of PV modules, a plurality of longitudinal flexible lines, a plurality of transverse flexible lines, wherein each end of said lines are fastened and tensioned to predetermined fastening points on said primary buoyant assembly forming a grid within said assembly, a plurality of fastening units for locking intersecting points between said longitudinal and transverse lines of said grid, wherein said plurality of fastening units also function as means for anchoring said plurality of PV modules; a plurality of mooring lines and a plurality of anchors, wherein one end of each mooring line is connected to said primary buoyant assembly and the other end of the mooring line is connected to an anchor on the ocean floor.

In a preferred embodiment the present invention the primary buoyant assembly comprise a first, second, third and fourth oblong buoyancy elements forming a rectangular frame.

In a further preferred embodiment, the oblong buoyancy elements are not directly fastened to one another but interconnected through the longitudinal and transverse flexible lines.

According to a further embodiment, each oblong buoyancy elements have a predetermined number of predetermined fastening points.

In an alternative embodiment, said first, second, third and fourth oblong buoyancy elements are formed as one part.

In a further alternative embodiment, said primary buoyant assembly forms a buoyant circular frame.

In a preferred embodiment, each fastening unit comprise a first internal coupler unit, a second coupler unit, a base for holding said first and second coupler unit with a threaded section and a lid to be threaded on said base for locking the fastening unit.

in a further embodiment, said plurality of mooring lines includes mooring bridles, wherein each said mooring bridle is fastened to at least two or more predetermined fastening points and an anchor.

### Brief description of drawings

Figure 1 illustrates a perspective overview of an embodiment of the invention,
Figure 2 illustrates an embodiment of the invention without photovoltaic (PV) modules,
Figure 3 illustrates an embodiment of the invention without PV modules and mooring,
Figure 4 illustrates a detailed view for an embodiment for fastening a tension line to a buoyancy module,
Figure 5 illustrates another embodiment of the invention utilizing mooring bridles,
Figure 6 illustrates another embodiment of the invention utilizing mooring bridles and additional buoyancy units,
Figure 7 illustrates another embodiment of the invention wherein the buoyancy module is circular,
Figure 8 illustrates another embodiment of the invention wherein the circular buoyancy module utilizes mooring bridles,
Figure 9 illustrates a detailed view of an embodiment of a fastening unit,
Figure 10 illustrates a detailed view of PV modules connected to fastening points in a floating mooring grid.

### Detailed description of the invention

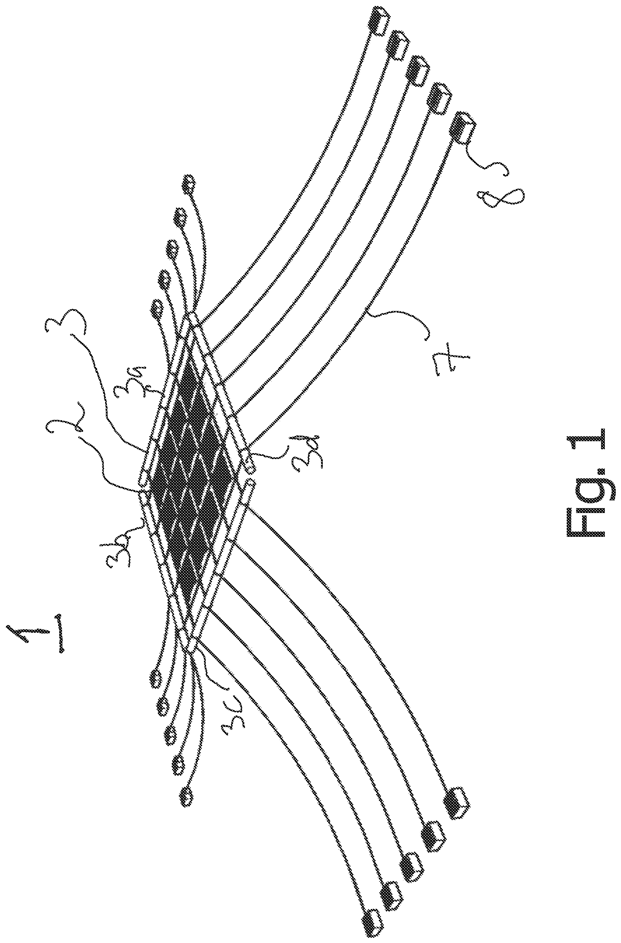

Figure 1 to figure 3 shows a floating photovoltaic (PV) fastening arrangement **1,** or henceforth, a floating mooring grid **1** intended to function as a robust and stable anchoring area at predetermined location for a plurality of floating PV modules **2.** The floating mooring grid **1** comprises a primary buoyant assembly **3,** which can comprise a first, second, third and fourth oblong buoyancy elements **3a, 3b, 3c, 3d,** forming a buoyant rectangular frame, surrounding said plurality of floating photovoltaic modules **2.** In an embodiment said arrangement the oblong buoyancy elements **3a, 3b, 3c, 3d** can be tubes made of polymer materials or metals. In the embodiment shown in figures 1-3, the oblong buoyancy elements are not directly coupled to each other at the corner of the frame but held at a short distance from each other. Hence the tubes constituting the buoyancy elements are free to move somewhat with respect to each other.

Said floating mooring grid **1** further comprise of a plurality of flexible longitudinal lines **4** and a plurality of flexible transverse lines **5,** wherein a first end of each longitudinal line **4** is fastened to the first oblong buoyancy element **3a** and the opposite second end of each longitudinal line **4** is fastened the third oblong buoyancy element **3c.**A first end of each of the transverse lines **5** is fastened to the second oblong buoyancy element **3b** and the opposite second end of each transverse line **5** is fastened the fourth oblong buoyancy element **3d.** Said plurality of longitudinal lines **4** and a plurality of transverse lines **5** are provided in tension in order to maintain the shape and structural integrity of said floating mooring grid **1,** as will be explained below. The lines are preferably fastened equidistantly along the tubes. The flexible lines are preferably made of rope, such as a synthetic fibre robe, e.g., nylon, polypropylene, polyester, Kevlar, HMPE or other materials known to have long durability in marine environments.

As will be explained in detail below, the tubes 3a,3b, 3c and 3d are moored to provide tension to the flexible lines 4, 5, so that the flexible lines 4, 5 are taut between the tubes.

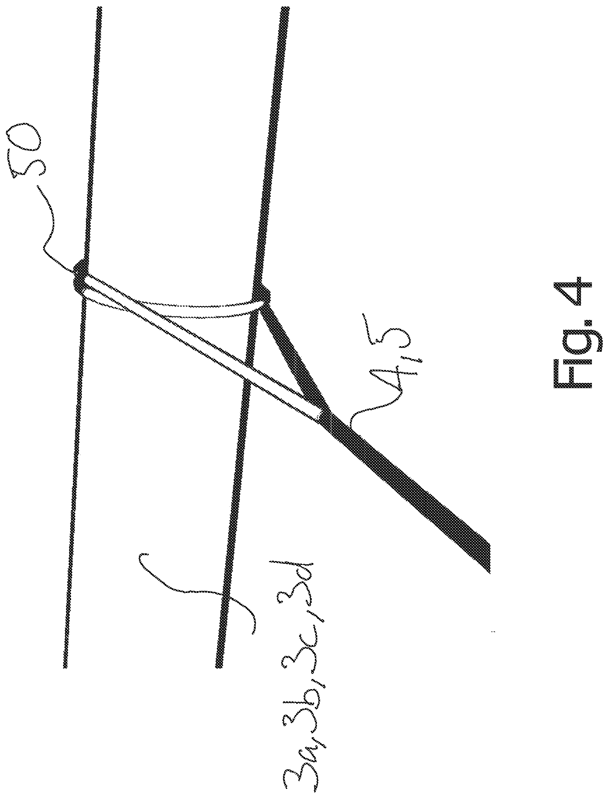

Figure 4 shows a preferred embodiment wherein said pluralities of longitudinal and transverse lines **4, 5** are tied to a predetermined fastening point **50** on said oblong buoyancy elements **3a, 3b, 3c, 3d,** providing tension to said pluralities of longitudinal and transverse lines **4, 5.** The tying of the line can be done by laying the line one or more times around the tube and attaching the end of the line to the part extending between the tubes, As shown in figure 4. The fastening point **50** may just be a uniform surface of the tube, but it may also comprise a groove around the tube or elevations between which it line is placed.

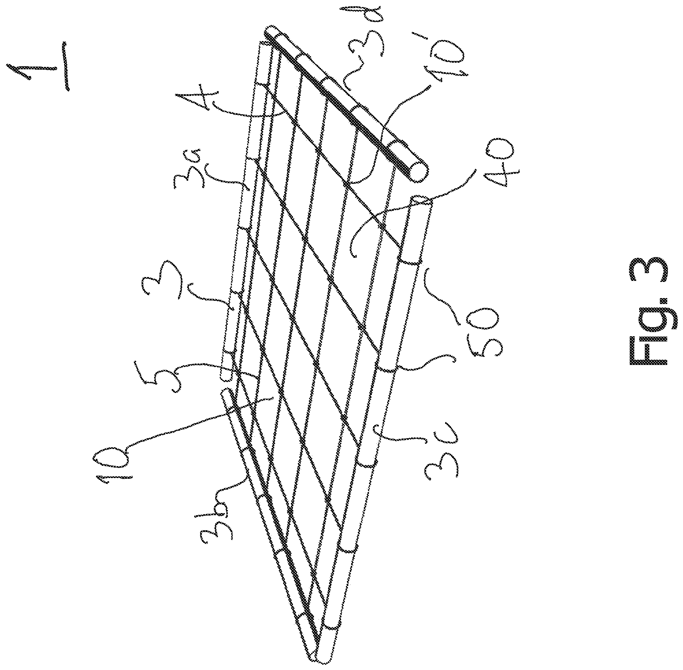

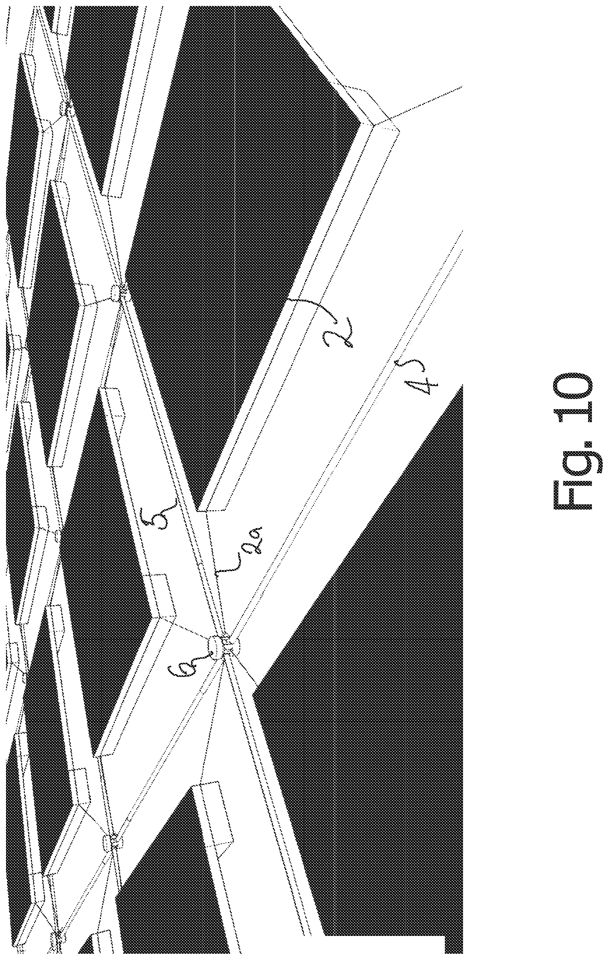

At each intersecting point **10'** between the longitudinal and transverse lines **4, 5,** said longitudinal and transverse lines **4, 5** are locked to each other by a fastening unit **6,** as shown in figure 10. The fastening unit **6** resists longitudinal and transverse movements of said longitudinal and transverse lines **4, 5.** The combination of the pluralities of longitudinal and transverse lines **4, 5** and fastening units **6** form a plurality of rectangle enclosures or spaces **40** (se figure 3) within the primary buoyant assembly **3,** in effect forming the grid **10** of the floating mooring grid **1.** Each rectangle enclosure **40** comprise two sections of longitudinal lines **4,** two sections of transverse lines **5** and four fastening units **6.** Each rectangle enclosure **40** is intended to accomodate a floating photovoltaic module **2,** wherein said floating photovoltaic module **2** can be moored or fastened by at least tethering lines **2a,** preferably four tethering lines **2a,** to the four adjacent fastening units **6** of the rectangle enclosure **40.**

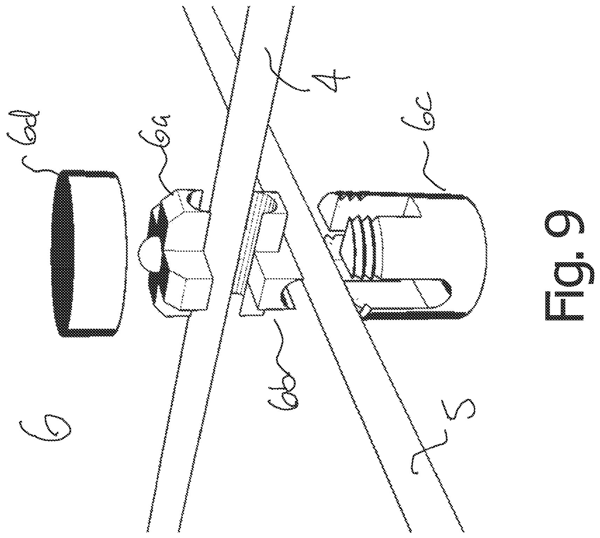

As shown in figure 9, an embodiment the fastening unit **6** include the following components; a first internal coupler unit **6a,** a second coupler unit **6b,** a base **6c** for holding said first and second coupler unit **6a, 6b** with a threaded section and a lid **6d** to be threaded on said base **6c** for locking itself and said components **6a, 6b, 6c** on to an intersection **10'** of the longitudinal and transverse lines **4, 5.** The first and second coupler unit **6a, 6b** and base **6c** are adapted to provide a fit for the intersection **10'** of the longitudinal and transverse lines **4, 5.**

Said components **6a, 6b, 6c, 6d** of the fastening unit **6** can be made of buoyant material which may prove useful during installation or maintenance when on site in the open waters. The fastening unit **6** is intended to provide a simple and straightforward means of locking an intersection **10'** of said longitudinal and transverse lines **4, 5.**

Although the fastening units 6 are designed to restrict longitudinal movement of the lines at their intersection, the fastening units may be designed to allow longitudinal movement if a tension in a line exceeds a predetermined value. The predetermined value is lower than the rupture strength of the line. This way the structure can withstand higher forces without being broke apart.

If a structure has been subjected to forces that have caused any lines to slip relative to the fastening units, the units may later be disengaged, the ropes moved to the right position and the fastening units attached again at the right location.

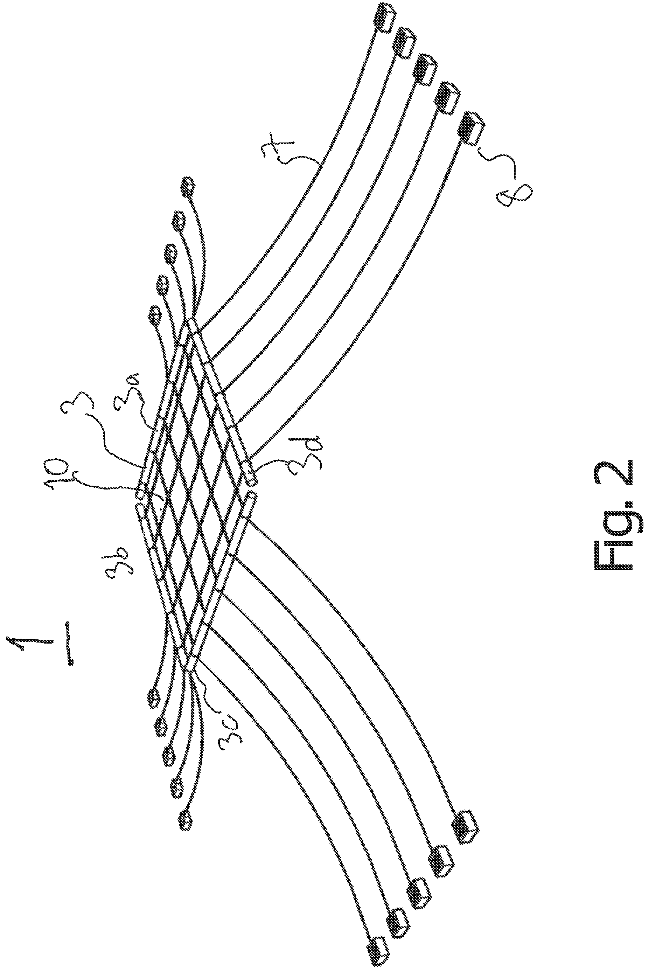

An embodiment of the mooring configuration is shown in figures 1 and 2, where each mooring line **7** is fastened to the floating mooring grid **1** at a predetermined fastening point **50,** which may be at the same or a different place than the fastening point of the flexible lines **4, 5,** and the opposite end of said mooring line **7** is connected to an anchor **8** located on the ocean floor as shown in figure 1 and 2.

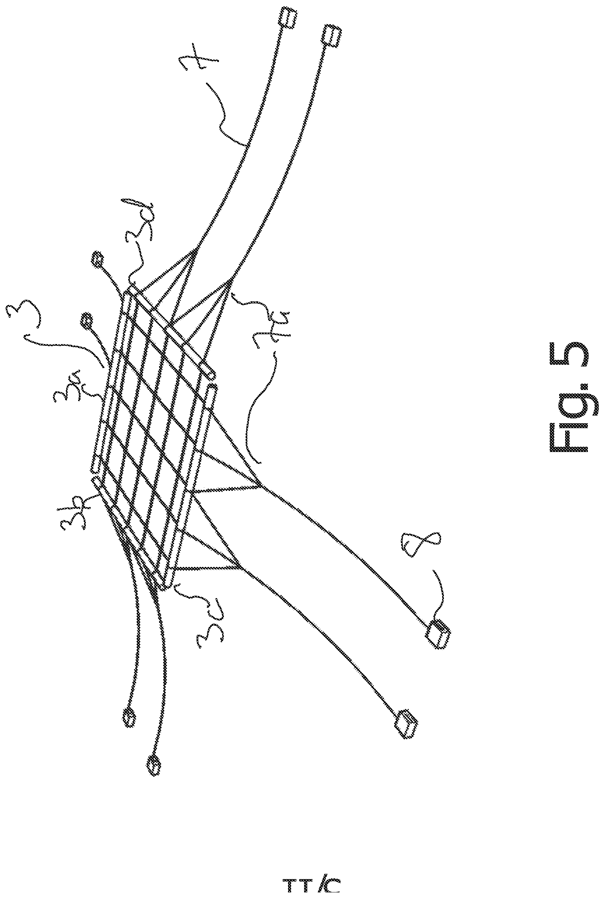

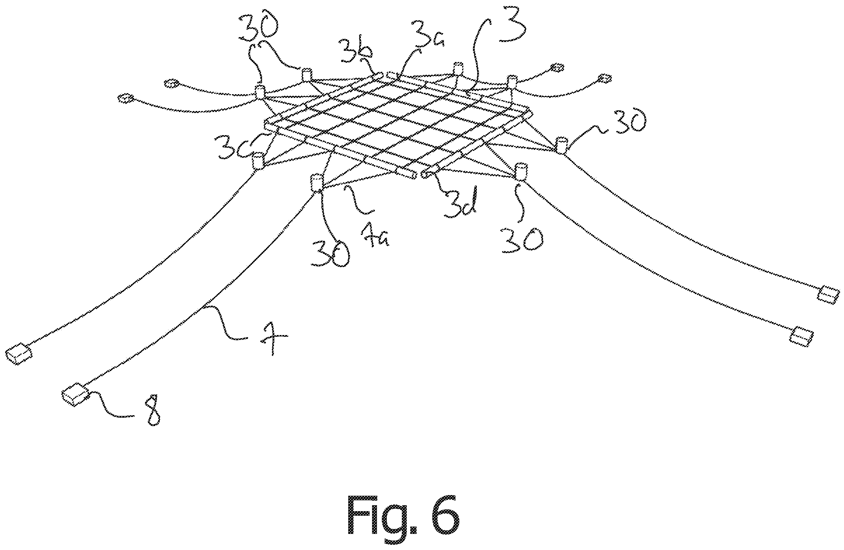

As shown in figure 5, an alternative embodiment of the mooring configuration includes mooring bridles **7a,** wherein a mooring bridle **7a** is connected to at least two or more predetermined fastening points **50** and an anchor **8.** The mooring bridles **7a** can also include additional buoyancy elements **30,** as shown in figure 6, in order to provide additional buoyancy to the floating mooring grid **1** and the mooring lines **7** or mooring bridles **7a.**

The mooring tension from the mooring lines 7 is selected to provide a tension of the flexible lines **4, 5** within a predetermined range. The tension may be adjusted by adjusting the length of the mooring lines **7** or repositioning the anchors **8.**

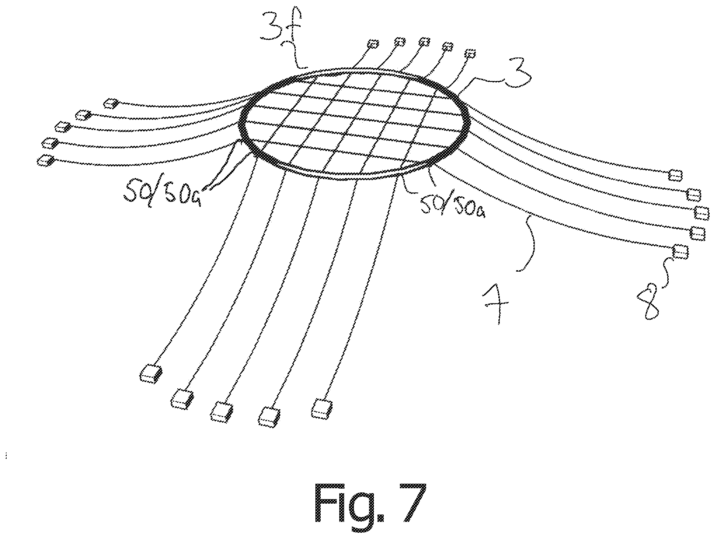

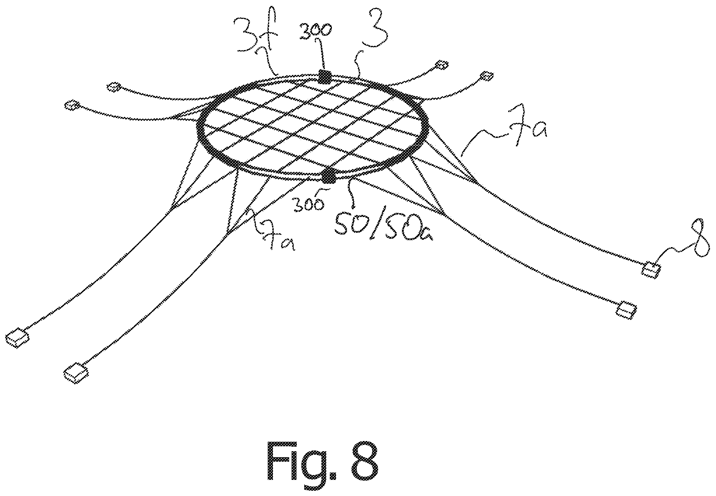

In an alternative embodiment of the invention the primary buoyant assembly **3** can be a buoyant circular frame **3f** as shown in figures 7 and 8. Said circular frame **3f** can be one tube or several compounded tubes made of polymer materials or metals. Said pluralities of longitudinal and transverse lines **4, 5** are also tied to a predetermined fastening point **50** on said circular frame **3f** providing tension to said pluralities of longitudinal and transverse lines **4, 5.**

In the embodiments of figures 7 and 8, a pre-tensioning of the lines **4, 5** may be done when the flexible lines **4,5** are attached to the circular frame **3f.** The mooring lines **7** may influence on the tension of the lines **4, 5** by deforming the circular frame **3f,** but in that case, the lines **4,5** extending, e.g. in the longitudinal direction, may get an increased tension while the lines **4, 5** extending transverse of the longitudinal lines **4, 5** may get a reduced tension. It is therefore conceivable to have a means for transferring the mooring tension from the mooring lines **7, 7a** to each flexible line **4, 5.** This may be by providing a direct coupling **50a** between a mooring line **7, 7a** and a flexible line **4, 5,** such as providing a mechanism **50a** in the circular frame **3f** allowing the flexible lines **4, 5** and mooring lines **7, 7a** to move transverse to the circular frame **3f.** This may be a sheave **50a** over which a continuous line can extend or a coupling piece **50a** to which the mooring line and the flexible line are attached, and which is allowed to move relative to the circular frame.

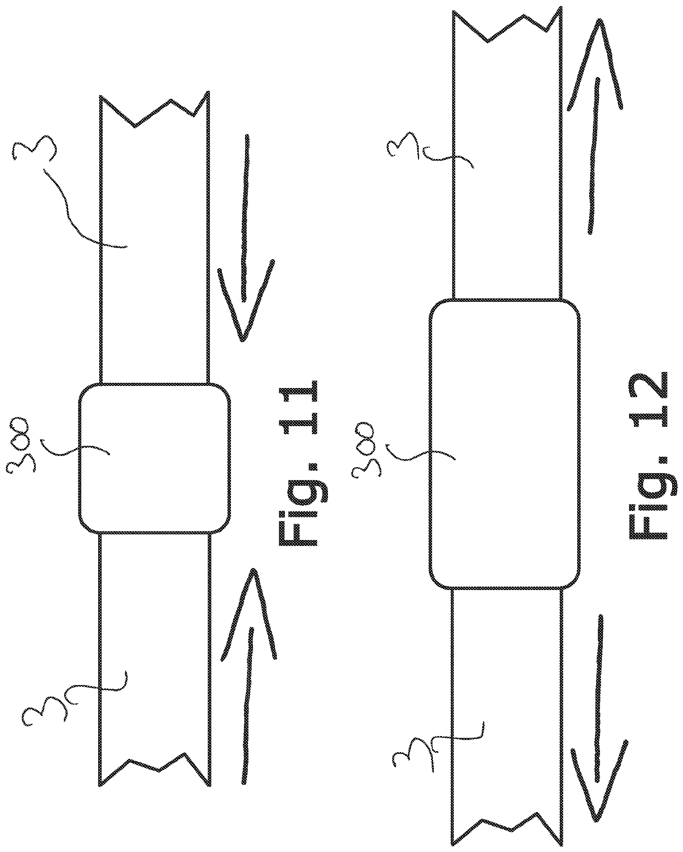

Another alternative is to provide the circular frame **3f** with joints **300,** as shown in figure 8, figure 11 and figure 12, such as one or more telescopic joints **300** that allow for an increase or reduction of the circumference of the circular frame **3f.**

The oblong buoyancy elements **3a, 3b, 3c, 3d** can also have at least one or more telescopic joints **300** that would allow for an increase or reduction of their respective length for achieving a preferred tension in the mooring lines **7, 7a** and the flexible lines **4, 5.**

## Claims

1. A floating photovoltaic (PV) fastening arrangement (1) for fastening a plurality of floating PV modules (2) generating electric power comprising;
a primary buoyant assembly (3) for providing an enclosure for and means for anchoring said plurality of PV modules (2),
a plurality of flexible longitudinal lines (4),
a plurality of flexible transverse lines (5),
wherein each end of said flexible lines (4, 5) are fastened to predetermined fastening points (50) on said primary buoyant assembly (3) and forming a grid (10) within said assembly (3), said grid forming a plurality of spaces (40) to accommodate at least one floating photovoltaic module (2),
a plurality of fastening units (6) for locking intersecting points (10') between said longitudinal and transverse lines (4, 5) of said grid (10),
wherein said plurality of fastening units (6) also function as means for anchoring said floating photovoltaic module (2),
a plurality of mooring lines (7) and a plurality of anchors (8),
wherein one end of a mooring line (7) is connected to said primary buoyant assembly (3) and the other end of the mooring line is connected to an anchor (8) on the ocean floor.

2. The arrangement according to claim 1, wherein said primary buoyant assembly (3) further comprise a first, second, third and fourth oblong buoyancy elements (3a, 3b, 3c, 3d) forming a rectangular frame.

3. The arrangement of claim 2, wherein said oblong buoyancy elements (3a, 3b, 3c, 3d) are not directly fastened to one another but connected through said longitudinal flexible lines (4, 5).

4. The arrangement according to any of the previous claims, wherein each oblong buoyancy elements (3a, 3b, 3c, 3d) have a predetermined number of predetermined fastening points (50).

5. The arrangement according to claim 2, 3 or 4, wherein said first, second, third and fourth oblong buoyancy elements (3a, 3b, 3c, 3d) are formed as one part.

6. The arrangement according to claim 1, wherein said primary buoyant assembly (3) form a buoyant circular frame (3f).

7. The arrangement according to any of the previous claims, wherein a fastening unit (6) further comprise a first internal coupler unit (6a), a second coupler unit (6b), a base (6c) for holding said first and second coupler unit (6a, 6b) with a threaded section and a lid (6d) to be threaded on said base (6c) for locking the fastening unit (6).

8. The arrangement according to any of the previous claims, wherein said PV modules (2) are anchored to said fastening units (6) by at least one tethering line (2a).

9. The arrangement according to any of the previous claims, wherein said plurality of mooring lines (7) further includes mooring bridles (7a),
wherein said mooring bridle (7a) is fastened to at least two or more predetermined fastening points (50) and an anchor (8).

## Patentansprüche

1. Schwimmende Photovoltaik-(PV-)Befestigungsanordnung (1) zur Befestigung einer Vielzahl von schwimmenden PV-Modulen (2), die elektrische Energie erzeugen, umfassend;
eine primäre schwimmfähige Anordnung (3) zum Bereitstellen einer Umhüllung für und Mittel zum Verankern der Vielzahl von PV-Modulen (2),
eine Vielzahl von flexiblen Längsleinen (4),
eine Vielzahl von flexiblen Querleinen (5),
wobei jedes Ende der flexiblen Leinen (4, 5) an vorbestimmten Befestigungspunkten (50) an der primären schwimmfähigen Anordnung (3) befestigt ist und ein Gitter (10) innerhalb der Anordnung (3) bildet, wobei das Gitter eine Vielzahl von Räumen (40) bildet, um mindestens ein schwimmendes Photovoltaikmodul (2) aufzunehmen,
eine Vielzahl von Befestigungseinheiten (6) zum Verriegeln von Kreuzungspunkten (10') zwischen den Längs- und den Querleinen (4, 5) des Gitters (10),
wobei die Vielzahl von Befestigungseinheiten (6) auch als Mittel zum Verankern des schwimmenden Photovoltaikmoduls (2) fungieren,
eine Vielzahl von Festmacherleinen (7) und eine Vielzahl von Ankern (8),
wobei ein Ende einer Festmacherleine (7) mit der primären schwimmfähigen Anordnung (3) verbunden ist und das andere Ende der Festmacherleine mit einem Anker (8) auf dem Meeresboden verbunden ist.

2. Anordnung nach Anspruch 1, wobei die primäre schwimmfähige Anordnung (3) ferner ein erstes, zweites, drittes und viertes längliches schwimmfähiges Element (3a, 3b, 3c, 3d) umfasst, die einen rechteckigen Rahmen bilden.

3. Anordnung nach Anspruch 2, wobei die länglichen schwimmfähigen Elemente (3a, 3b, 3c, 3d) nicht direkt miteinander befestigt sind, sondern durch die flexiblen Längsleinen (4, 5) verbunden sind.

4. Anordnung nach einem der vorstehenden Ansprüche, wobei jedes längliche schwimmfähige Element (3a, 3b, 3c, 3d) eine vorbestimmte Anzahl von vorbestimmten Befestigungspunkten (50) aufweist.

5. Anordnung nach Anspruch 2, 3 oder 4, wobei die ersten, zweiten, dritten und vierten länglichen schwimmfähigen Elemente (3a, 3b, 3c, 3d) als ein Teil ausgebildet sind.

6. Anordnung nach Anspruch 1, wobei die primäre schwimmfähige Anordnung (3) einen schwimmfähigen kreisförmigen Rahmen (3f) bildet.

7. Anordnung nach einem der vorstehenden Ansprüche, wobei eine Befestigungseinheit (6) ferner eine erste interne Kopplereinheit (6a), eine zweite Kopplereinheit (6b), eine Basis (6c) zum Halten der ersten und zweiten Kopplereinheit (6a, 6b) mit einem Gewindeabschnitt und einen Deckel (6d) umfasst, der auf die Basis (6c) aufzuschrauben ist, um die Befestigungseinheit (6) zu verriegeln.

8. Anordnung nach einem der vorstehenden Ansprüche, wobei die PV-Module (2) an den Befestigungseinheiten (6) durch mindestens eine Halteleine (2a) verankert sind.

9. Anordnung nach einem der vorstehenden Ansprüche, wobei die Vielzahl von Festmacherleinen (7) ferner Festmacherhahnepots (7a) umfasst,
wobei der Festmacherhahnepot (7a) an mindestens zwei oder mehr vorbestimmten Befestigungspunkten (50) und einem Anker (8) befestigt ist.

## Revendications

1. Agencement de fixation photovoltaïque (PV) flottant (1) destiné à fixer une pluralité de modules PV flottants (2) générant de l'énergie électrique, comprenant ;
un ensemble flottable principal (3) destiné à fournir une enceinte pour ladite pluralité de modules PV (2) et à fournir un moyen pour les ancrer,
une pluralité de lignes longitudinales souples (4),
une pluralité de lignes transversales souples (5),
dans lequel chaque extrémité desdites lignes flexibles (4, 5) est fixée à des points de fixation prédéterminés (50) sur ledit ensemble flottable principal (3) et formant une grille (10) au sein dudit ensemble (3), ladite grille formant une pluralité d'espaces (40) pour recevoir au moins un module photovoltaïque flottant (2),
une pluralité d'unités de fixation (6) destinées à verrouiller des points d'intersection (10') entre lesdites lignes longitudinales et transversales (4, 5) de ladite grille (10),
dans lequel ladite pluralité d'unités de fixation (6) fonctionnent également comme un moyen d'ancrage dudit module photovoltaïque flottant (2),
une pluralité de lignes d'amarre (7) et une pluralité d'ancres (8),
dans lequel une extrémité d'une ligne d'amarre (7) est reliée audit ensemble flottable principal (3) et l'autre extrémité de la ligne d'amarrage est reliée à une ancre (8) sur le fond de l'océan.

2. Agencement selon la revendication 1, dans lequel ledit ensemble flottable principal (3) comprend en outre un premier, un deuxième, un troisième et un quatrième élément de flottabilité oblong (3a, 3b, 3c, 3d) formant un cadre rectangulaire.

3. Agencement selon la revendication 2, dans lequel lesdits éléments de flottabilité oblongs (3a, 3b, 3c, 3d) ne sont pas directement fixés les uns aux autres mais reliés par lesdites lignes flexibles longitudinales (4, 5).

4. Agencement selon l'une quelconque des revendications précédentes, dans lequel chaque élément de flottabilité oblong (3a, 3b, 3c, 3d) présente un nombre prédéterminé de points de fixation prédéterminés (50).

5. Agencement selon la revendication 2, 3 ou 4, dans lequel lesdits premier, deuxième, troisième et quatrième éléments de flottabilité oblongs (3a, 3b, 3c, 3d) sont formés en une seule pièce.

6. Agencement selon la revendication 1, dans lequel ledit ensemble flottable principal (3) forme un cadre circulaire flottable (3f).

7. Agencement selon l'une quelconque des revendications précédentes, dans lequel une unité de fixation (6) comprend en outre une première unité d'accouplement interne (6a), une seconde unité d'accouplement (6b), une base (6c) pour maintenir lesdites première et seconde unités d'accouplement (6a, 6b) avec une section filetée et un couvercle (6d) à fileter sur ladite base (6c) pour verrouiller l'unité de fixation (6).

8. Agencement selon l'une quelconque des revendications précédentes, dans lequel lesdits modules PV (2) sont ancrés auxdites unités de fixation (6) par au moins une ligne d'attache (2a).

9. Agencement selon l'une quelconque des revendications précédentes, dans lequel ladite pluralité de lignes d'amarre (7) comporte en outre des pattes d'oie d'amarrage (7a),
dans lequel ladite patte d'oie d'amarrage (7a) est fixée à au moins deux points de fixation prédéterminés (50) ou plus et à une ancre (8).
